# EUROPÄISCHE PATENTSCHRIFT

(11) **EP 1 262 005 B1**
(45) Veröffentlichungstag und Bekanntmachung des Hinweises auf die Patenterteilung: **04.04.2012**
(21) Anmeldenummer: 01915016.8
(22) Anmeldetag: 13.02.2001
(51) Int. Cl.: H02B 13/035

(54) **DREIPHASIGE HOCHSPANNUNGSSCHALTANLAGE MIT EINPHASIG GEKAPSELTEN BAUGRUPPEN**
THREE-PHASE HIGH VOLTAGE SWITCHGEAR WITH SINGLE-PHASE-ENCAPSULATED MODULES
INSTALLATION DE COMMUTATION HAUTE TENSION TRIPHASEE COMPORTANT DES MODULES ENCAPSULES MONOPHASES

(30) Priorität: 07.03.2000 DE 10011888
(43) Veröffentlichungstag der Anmeldung: 04.12.2002
(73) Patentinhaber: SIEMENS AKTIENGESELLSCHAFT, 80333 München (DE)
(72) Erfinder: MEINHERZ, Manfred, 13467 Berlin (DE)
(86) Internationale Anmeldenummer: PCT/DE2001/000608
(87) Internationale Veröffentlichungsnummer: WO 2001/067573

(56) Entgegenhaltungen:
- EP-A- 0 228 504

## Beschreibung

Die Erfindung liegt auf dem Gebiet der Energieverteilung und ist bei der anlagentechnischen Gestaltung von gekapselten, gasisolierten Hochspannungsschaltanlagen anzuwenden, die einphasig gekapselte Baugruppen wie Leistungsschalter mit Trenn-und Erdungsschaltern und stromleitende Verbindungsstücke aufweisen und bei denen drei Leistungsschalter parallel nebeneinander angeordnet und über gekapselte Anlagenteile mit den quer zu den Leistungsschaltern verlaufenden stromleitenden Verbindungsstücken verbunden sind.

Bei einer bekannten, als Freiluftanlage gebauten Hochspannungsschaltanlage dieser Art sind die Stromanschlüsse der horizontal angeordneten Leistungsschalter vertikal aus den Leistungsschaltern herausgeführt und über gekapselte Anlagenteile wie Trenner und/oder Erder, Stromwandler oder anderweitige Verbindungsbausteine und/oder gekapselte Phasenleiterabschnitte an eine quer zu den Leistungsschaltern verlaufende dreiphasige, einphasig gekapselte Sammelschiene angeschlossen. Die Leistungsschalter bzw. die den Leistungsschaltern zugeordneten Anlagenteile sind dabei an den Verbindungsstellen in üblicher Weise mit je einem Verbindungsflansch versehen, der aufgrund seiner kreisförmigen Gestaltung eine Mittelachse aufweist. Die entsprechenden Mittelachsen von drei Leistungsschaltereinheiten liegen in einer gemeinsamen Ebene (ABB Technik 6/91, Seite 8).

Für Freiluft-Hochspannungsschaltanlagen ist auch ein Anlagentyp bekannt, bei dem je Phase mehrere Leistungsschalter elektrisch hintereinander geschaltet und räumlich hintereinander oder nebeneinander angeordnet sein können. Die Stromanschlüsse der Leistungsschalter sind dabei axial stirnseitig aus den Schaltergehäusen herausgeführt (DE 29 29 054 A1).

Bei Hochspannungsschaltanlagen mit einphasig gekapselten Schaltfeldern ist es auch üblich, die Sammelschiene dreiphasig gekapselt auszugestalten. Für den Übergang von drei nebeneinander angeordneten Leistungsschaltern auf eine quer dazu verlaufende dreiphasig gekapselte Sammelschiene ist ein rohrförmiger Kapselungsbaustein bekannt, der drei in Achsrichtung des Kapselungsgehäuses verlaufende Phasenleiterabschnitte aufweist, die über Stützisolatoren an der Wand des Kapselungsgehäuses abgestützt sind. Jeder Phasenleiterabschnitt ist mit einem Abzweig versehen, wobei diese Abzweige in Achsrichtung des Kapselungsgehäuses längs einer Mantellinie hintereinander angeordnet sind. Zum Anschluss der Abzweige an die Leistungsschalter sind entsprechende Anschlussflansche vorgesehen, wobei die Mittelachsen dieser Anschlussflansche in einer gemeinsamen Ebene liegen (EP 0 540 131 B1).

Für eine dreiphasig gekapselte Sammelschiene einer Hochspannungsschaltanlage sind weiterhin Kapselungsbausteine bekannt, deren Gehäuse aus einem rohrförmigen Mantelteil und zwei scheibenförmigen Seitenteilen besteht und bei denen die Phasenleiterabschnitte und die Abzweige an feststoffisolierten Ausleitungen enden, die auf die Seitenteile und das Mantelteil des Gehäuses aufgesetzt sind (DD 295 431 A5).

Zur Umlenkung der Phasenleiter einer dreiphasig gekapselten gasisolierten Hochspannungsleitung um 90° ist im übrigen ein baustein bekannt, der ein kugelartig gestaltetes mit zwei Anschlussflanschen versehenes Gehäuse aufweist, welches drei ellbogenartig geformte Leiterteile aufnimmt, wobei jedes Leiterteil über einen Isolator am Gehäuse abgestützt ist. Die Strompfade der drei Leiterteile sind dabei im Dreieck angeordnet (US 4 059 723 A).

Um bei gekapselten Schaltanlagen an Abzweigstellen von dreiphasig gekapselten Sammelschienen die Bauhöhe zu verringern, ist es weiterhin bekannt, die Phasenleiter nebeneinander in einer Ebene anzuordnen, wobei die drei Phasenleiter in Teilzylindern der Kapselung verlaufen und diese Teilzylinder durch gegenüberliegende und zueinander konkav verlaufende Wandungen miteinander verbunden sind. Im Abzweigbereich sind zwei sich in übereinander angeordneten Ebenen kreuzende Sammelschienen durch einen vertikal verlaufenden Übergangsabschnitt miteinander verbunden (DE 36 02 875 A1).

Ausgehend von einer dreiphasigen Hochspannungsschaltanlage mit den Merkmalen des Oberbegriffes des Patentanspruches 1 liegt der Erfindung die Aufgabe zugrunde, den Übergang von den Leistungsschaltern auf die stromleitenden Verbindungsstücke so auszugestalten, dass sowohl dieser Übergang als auch die Schaltanlage als Ganzes möglichst wenig Raum, insbesondere Bauhöhe, aber auch Stellfläche benötigt und für Wartungsarbeiten dennoch leicht zugänglich ist.

Zur Lösung dieser Aufgabe ist gemäß der Erfindung vorgesehen, dass zur Aufnahme der Phasenleiterabschnitte ein einstückiger Verbindungsbaustein angeordnet ist, der mit wenigstens zwei Anschlussbereichen mit jeweils drei nebeneinander angeordneten, jeweils eine Mittelachse aufweisenden Anschlussflanschen versehen ist; dabei liegen sowohl die Mittelachsen der Anschlussflansche des Verbindungsbausteines als auch die Mittelachsen der Anschlussflansche der stromleitenden Verbindungsstücke in der gleichen Ebene wie die Mittelachsen der Anschlussflansche der Leistungsschalter.

Eine derartige Ausgestaltung der Schaltanlage sieht also vor, für den Übergang von den drei einphasig gekapselten Leistungsschaltern auf die drei ebenfalls einphasig gekapselten stromleitenden Verbindungsstücke einen einzigen Baustein zu verwenden, bei dem die Achsen aller Anschlussbereiche in einer gemeinsamen Ebene liegen. Dies hat zur Folge, dass die stromleitenden Verbindungsstücke nicht versetzt zu einer vertikalen oder horizontalen Ebene angeordnet werden müssen, wodurch sich der Raumbedarf der Anlage verringert. Zugleich werden durch die Verwendung eines einzigen Bausteines an Stelle der bisher üblichen mehreren Bausteine Stück- und Montagekosten eingespart. Bei einer Schaltanlage mit - üblicherweise - horizontal angeordneten Leistungsschaltern wird zugleich die Bauhöhe der Anlage reduziert und damit die Zugänglichkeit zu Teilen der Anlage erleichtert. Durch die kompakte Ausgestaltung des Verbindungsbausteines wird auch die Stellfläche der Anlage reduziert. Hierzu ist es vorteilhaft, wenn die Gehäuse der jeweils drei parallel nebeneinander angeordneten Leistungsschalter als einstückiges Blockgehäuse ausgebildet sind (DE 8 907 711 U, DE 29806651.3 U). - Für den Fall, dass als Leistungsschalter solche mit stirnseitig angeordneten Stromanschlüssen verwendet werden, können alle Komponenten der Anlage in einer gemeinsamen horizontalen Ebene angeordnet werden.

Wenn der neue Verbindungsbaustein dazu dient, drei Leistungsschalter mit dem einen Ende von stromleitenden Verbindungsstücken zu verbinden, dann kann er als flaches Gehäuse ausgebildet sein, das den Charakter eines 90°-Sektors einer kreisförmigen Scheibe aufweist, wobei in dem Gehäuse drei Phasenleiterabschnitte angeordnet sind, die viertelkreisringförmig gestaltet sind und konzentrisch zueinander verlaufen. Dabei ist das Gehäuse zweckmäßig so gestaltet, dass jeder Phasenleiterabschnitt für sich gekapselt und über wenigstens einen Stützisolator am Gehäuse abgestützt ist.

Wenn dagegen der neue Verbindungsbaustein zur Verbindung von mehr als zwei Baugruppen dienen soll, dann ist er in weiterer Ausgestaltung der Erfindung zweckmäßig als flaches quaderförmiges Gehäuse auszubilden und in diesem Gehäuse sich kreuzende Phasenleiterabschnitte anzuordnen; in diesem Fall sind die Phasenleiterabschnitte in einem gemeinsamen Kapselungsraum anzuordnen, wobei sie sich am Gehäuse isolierend abstützen. - Wenn man hierbei den Verbindungsbaustein als T-Baustein ausbildet, also das flache, quaderförmige Gehäuse an drei Seitenflächen mit Anschlussflanschen versieht, dann ordnet man im Kapselungsraum zweckmäßig drei von einer Seitenfläche zur gegenüberliegenden Seitenfläche verlaufende Phasenleiterabschnitte sowie drei von diesen Phasenleiterabschnitten zur dritten Seitenfläche abzweigende Phasenleiterabschnitte an.

Der neue Verbindungsbaustein kann aber auch als sogenannter Kreuzbaustein ausgebildet sein, bei dem das flache, quaderförmige Gehäuse an allen vier Seitenflächen mit Anschlussflanschen versehen ist; in diesem Fall ist in weiterer Ausgestaltung der Erfindung vorgesehen, dass im Kapselungsraum drei von einer Seitenfläche zur gegenüberliegenden Seitenfläche verlaufende Phasenleiterabschnitte sowie drei weitere, die erstgenannten Phasenleiterabschnitte kreuzende Phasenleiterabschnitte angeordnet sind, wobei jeweils ein erstgenannter und ein weiterer Phasenleiterabschnitt miteinander verbunden sind.

Das Gehäuse des neuen Verbindungsbausteines wird in weiterer Ausgestaltung zweckmäßig als Gussgehäuse hergestellt. Im Falle einer Ausgestaltung des Verbindungsbausteines als T- oder Kreuz-Baustein erhält man dadurch eine mechanische stabile Konstruktion, dass die inneren und die äußeren Konturen dieses Gussgehäuses im wesentlichen von drei parallel verlaufenden Zylindern bestimmt sind, die von drei senkrecht dazu, ebenfalls parallel verlaufenden Zylindern gekreuzt werden. Um bei einer solchen Ausgestaltung die mit der Isoliergasfüllung verbundenen Kräfte aufnehmen zu können, sind zweckmäßig die Boden- und die Deckfläche des flachen Gehäuses im Bereich der Zwickel der sich kreuzenden Zylinder stoffschlüssig miteinander verbunden.

Damit der neue Verbindungsbaustein möglichst flach ausgestaltet werden kann, empfiehlt es sich im Falle eines T- oder Kreuzbausteines weiterhin, dass die sich jeweils kreuzenden Phasenleiterabschnitte derart gekröpft sind, dass im jeweiligen Kreuzungsbereich der eine Phasenleiterabschnitt um den gleichen Betrag oberhalb der die Mittelachse der Anschlussflansche aufnehmenden Ebene verläuft wie der andere Phasenleiterabschnitt unterhalb dieser Mittelebene.

Die isolierende Abstützung der Phasenleiterabschnitte erfolgt in an sich bekannter Weise mit Stützisolatoren, die an Laschen an der Gehäusewand (EP 0 540 131 B1) oder im Bereich von verschließbaren Öffnungen in der Gehäusewand (DE 8 904 007 U, Brown Boverie Mitt. 4-73, S. 142) befestigt werden.

Zur Verbindung zweier Phasenleiterabschnitte innerhalb des Verbindungsbausteines können an sich bekannte Leiterverbindüngen in Form von Hohlkugeln (DE 8 005 594 U) verwendet werden.

Zwei Ausführungsbeispiele einer gemäß der Erfindung ausgebildeten Hochspannungsschaltanlage sowie drei Ausführungsbeispiele für innerhalb einer solchen Anlage einsetzbare Verbindungsbausteine sind in den Figuren 1 bis 10 dargestellt. Dabei zeigt
Figur 1 eine Freiluftschaltanlage in sogenannter H-Schaltung, bei der am Übergang von den beiden Schenkeln des H auf die Querverbindung jeweils ein neuartiger Verbindungsbaustein angeordnet ist und bei der die einzelnen Leistungsschalter mit radial aus dem rohrförmigen Schaltergehäuse herausgeführten Stromanschlüssen versehen sind,
Figur 2 einen Teil einer Freiluftschaltanlage, bei der die Leistungsschalter mit stirnseitig angeordneten Stromzuführungen versehen sind,
die Figuren 3 und 4 im prinzipieller Darstellung einen Verbindungsbaustein mit zwei Anschlussbereichen,
die Figuren 5 und 6 in prinzipieller Darstellung die Ausgestaltung des Gehäuses eines Verbindungsbausteines als T- bzw. Kreuz-Baustein,
die Figuren 7 und 8 die äußere Gestaltung der beiden Bausteine gemäß der Figuren 5 und 6 und
Figur 9 die Anordnung von Phasenleiterabschnitten innerhalb eines Gehäuses gemäß den Figuren 6 und 8.

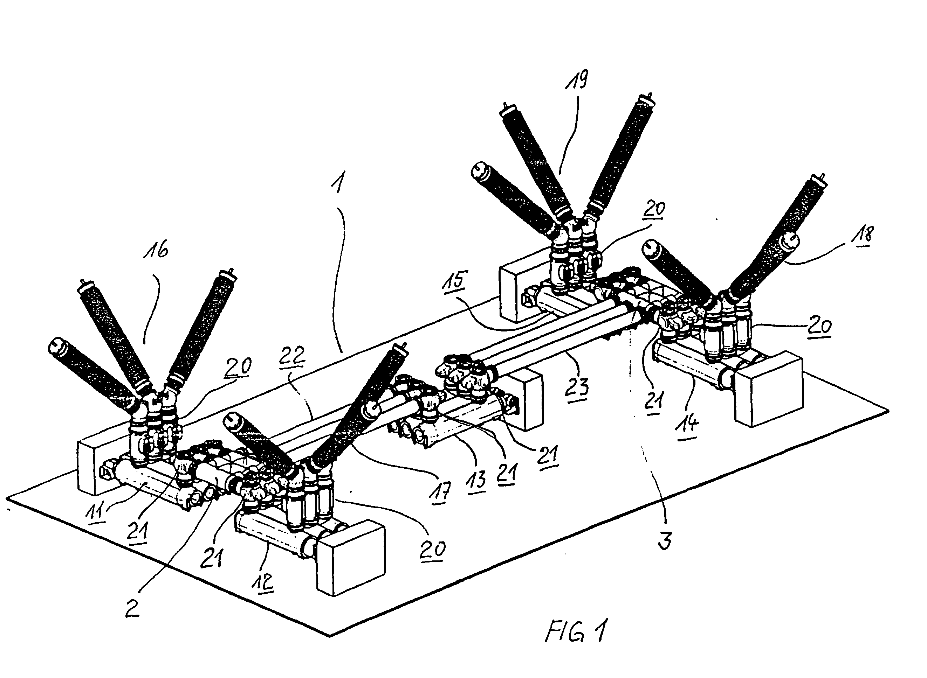

Figur 1 zeigt eine Freiluftschaltanlage, bei der in einer sogenannten H-Schaltung fünf Leistungsschalterbaugruppen 11, 12, 13, 14 und 15 angeordnet sind, wobei den Leistungsschalterbaugruppen 11 und 12 sowie 14 und 15 jeweils eine Freiluftanschluss-Baugruppe 16 bzw. 17 bzw. 18 bzw. 19 zum Anschluss von zwei Freileitungssystemen und zwei Transformatorstationen zugeordnet sind. Hierbei ist zwischen der jeweiligen Leistungsschalterbaugruppe und der zugehörigen Freiluftanschluss-Baugruppe eine Stromwandlerbaugruppe 20 angeordnet. Den Leistungsschalterbaugruppen sind weiterhin Winkeltrenner-Baugruppen 21 zugeordnet, mit denen die aus den liegend angeordneten Leistungsschaltern vertikal nach oben herausgeführten Stromanschlüsse in die Horizontale umgelenkt werden.

Zur Verbindung der Leistungsschalterbaugruppen untereinander sind Baugruppen 22 und 23 aus stromleitenden Verbindungsstücken in Form von einphasig gekapselten, gasisolierten Rohrleitern sowie zwei Verbindungsbausteine 2 und 3 vorgesehen. Diese Verbindungsbausteine dienen einerseits zur Verbindung von jeweils zwei Leistungsschalterbaugruppen 11 und 12 bzw. 14 und 15 sowie zur elektrischen Verbindung dieser Leistungsschalterbaugruppen mit den zu der Leistungsschalterbaugruppe 13 führenden stromleitenden Verbindungsstücken 22 und 23.

Die Verbindungsbausteine 2 und 3 haben eine flache, quaderförmige Kontur und sind an drei Seitenflächen mit jeweils drei Anschlussflanschen versehen, wobei die Mittelachsen aller Anschlussflansche in einer gemeinsamen horizontalen Ebene liegen. Dies hat zur Folge, dass auch bei den Baugruppen, die mit dem jeweiligen Verbindungsbaustein miteinander verbunden werden, die Mittelachsen der entsprechenden Anschlussflansche in einer gemeinsamen horizontalen Ebene liegen.

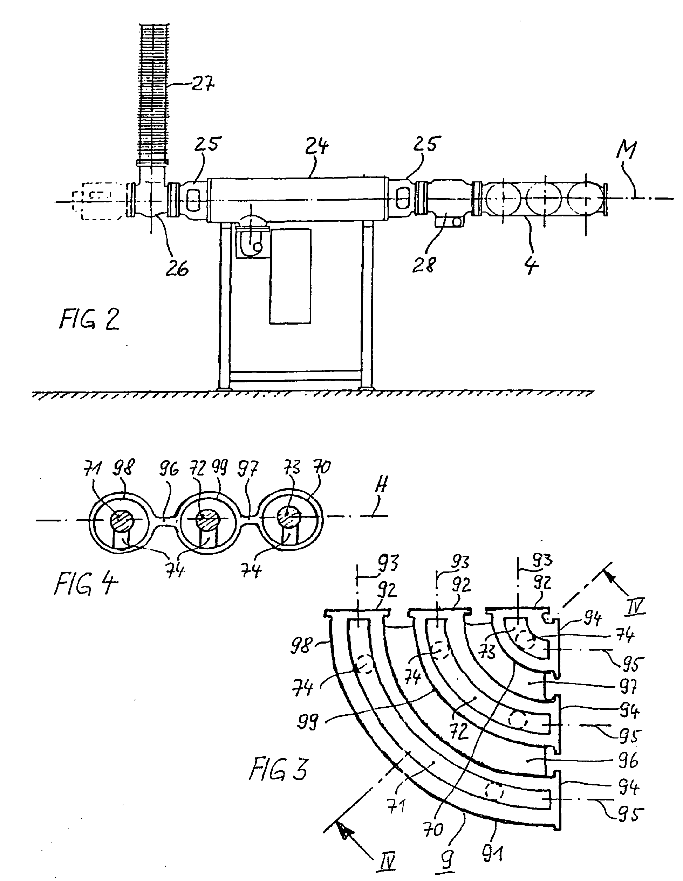

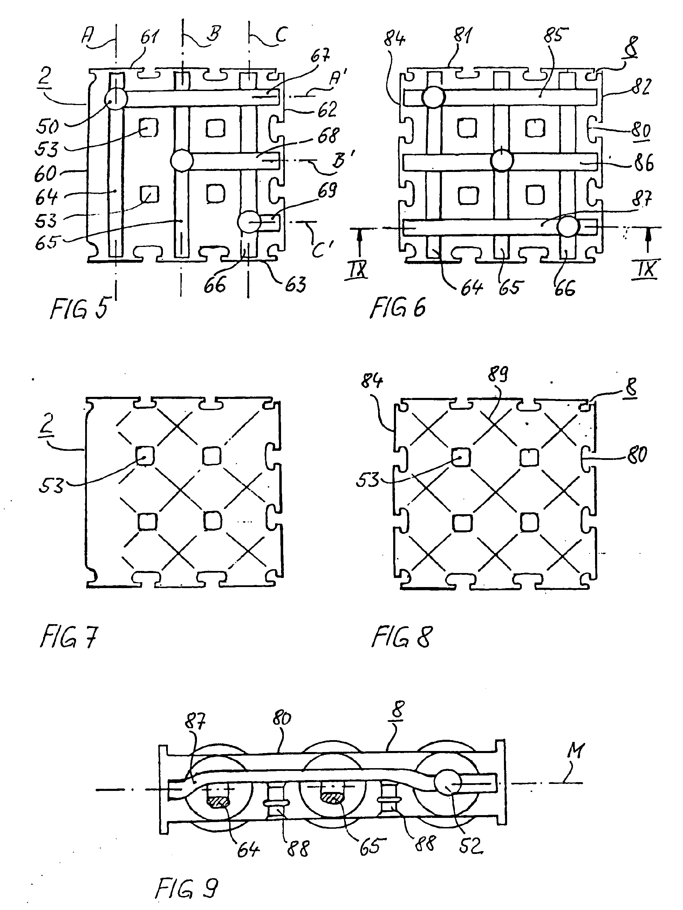

Figur 2 zeigt in horizontaler Ansicht eine Leistungsschalterbaugruppe 24, bei der die Stromanschlüsse aus dem jeweiligen Leistungsschalter horizontal, d. h. stirnseitig über Gehäusebausteine 25, bei denen es sich um Stromwandlerbausteine handeln kann, herausgeführt sind. Im linken Teil der Darstellung schließt sich an den Stromwandlerbaustein 25 ein Umlenkbaustein 26 an, der zugleich als Anschlussbaustein für eine Freiluftdurchführung 27 ausgestaltet ist. Am anderen Ende der Leistungsschalterbaugruppe sind je Leistungsschalter an den Gehäusebaustein 25 ein Trenner bzw. Trenner-Erder-Baustein 28 angeschlossen, an den anschließend ein Verbindungsbaustein 4 angeflanscht ist. Bei der erwähnten Ausgestaltung der Leistungsschalterbaugruppe 24 mit stirnseitigen Stromanschlüssen sind alle Baugruppen der Anlage in einer gemeinsamen horizontalen Ebene M angeordnet. - Der Verbindungsbaustein 4 ist gemäß dem später erläuterten Ausführungsbeispiel gemäß Figur 5 oder dem Ausführungsbeispiel gemäß Figur 6 ausgebildet.

Figur 3 zeigt in Draufsicht sowie gemäß der Schnittlinie IV in Figur 4 im Querschnitt einen Verbindungsbaustein 9, der als flaches Gehäuse 91 ausgebildet ist, das den Charakter eines 90°-Sektors einer kreisförmigen Scheibe aufweist. Das Gehäuse 91 hat somit zwei unter einem Winkel von 90° zueinander angeordnete Seitenflächen, an denen erste Anschlussflansche 92 sowie zweite Anschlussflansche 94 angeordnet sind. Die Anschlussflansche sind dabei an den Enden von viertelkreisringförmigen Rohrbögen 98, 99 und 70 angeordnet, die als Kapselungsgehäuse für ebenfalls viertelkreisringförmig gestaltete Phasenleiterabschnitte 71, 72 und 73 dienen. Die Rohrbögen 98, 99 und 70 sind dabei über Stege 96 und 97 stoffschlüssig miteinander verbunden.

Die Phasenleiterabschnitte 71, 72 und 73 verlaufen konzentrisch zueinander und sind innerhalb der einzelnen Rohrbögen mit Hilfe von Stützisolatoren 74 am Gehäuse 91 abgestützt.

Durch die erwähnte Ausgestaltung ist sichergestellt, dass die Mittelachsen 93 der Anschlussflansche 92 und die Mittelachsen 95 der Anschlussflansche 94 in einer gemeinsamen horizontalen Ebene H liegen.

Ein Verbindungsbaustein gemäß den Figuren 3 und 4 kann beispielsweise für eine Schaltanlage gemäß Figur 2 verwendet werden, wenn die Leistungsschaltereinheit an das eine Ende eines stromleitenden Verbindungsstückes anzuschließen ist, das aus drei horizontal nebeneinander angeordneten einphasig gekapselten Rohrleitern besteht.

Figur 5 zeigt den bei einer Anlage gemäß Figur 1 verwendeten Verbindungsbaustein 2, der gleichartig wie der Verbindungsbaustein 3 ausgebildet ist. Der Verbindungsbaustein besteht aus einem flachen, quaderförmigen Gehäuse 60, in dem sich kreuzende Phasenleiterabschnitte 64, 65 und 66 sowie 67, 68 und 69 angeordnet sind. Das Innere des Gehäuses bildet einen für alle Phasenleiterabschnitte gemeinsamen Kapselungsraum. Das Gehäuse ist an drei Seitenflächen mit Anschlussflanschen 61, 62 und 63 versehen, wobei sich die Anschlussflansche 61 und 63 gegenüber liegen. Die Mittelachsen A, B und C sowie A',B' und C' aller Anschlussflansche liegen in einer gemeinsamen horizontalen Ebene.

Wie sich aus der Darstellung in Figur 1 und der Darstellung in Figur 7 ergibt, ist die Gestalt des Gehäuses 60, d. h. sind die inneren und die äußeren Konturen dieses Gehäuses, bei dem es sich um ein Gussgehäuse handelt, im wesentlichen von drei parallel verlaufenden Zylindern bestimmt, die von drei senkrecht dazu, ebenfalls parallel verlaufenden Zylindern gekreuzt werden. Diese Zylinder verlaufen konzentrisch zu den Phasenleiterabschnitten. Bei dieser Gestaltung des Gehäuses ergeben sich Zwickelbereiche 53 der sich kreuzenden Zylinder. In diesen Zwickelbereichen ist die Deckfläche des Gehäuses 60 mit der Bodenfläche des Gehäuses stoffschlüssig verbunden.

Zur Verbindung des Phasenleiterabschnittes 64 mit dem Phasenleiterabschnitt 67 bzw. des Abschnittes 65 mit dem Abschnitt 68 sowie des Abschnittes 66 mit dem Abschnitt 69 ist jeweils ein Verbindungsbereich 50 bzw. 51 bzw. 52 vorgesehen.

Figur 6 zeigt einen Verbindungsbaustein 8, der im Prinzip wie der Verbindungsbaustein gemäß Figur 5 aufgebaut ist, dessen Gehäuse 80 jedoch zusätzlich zu den Anschlussflanschen 81, 82 und 83 auch an der vierten Seitenfläche mit Anschlussflanschen 84 versehen ist. Entsprechend erstrecken sich die querverlaufenden Phasenleiterabschnitte 85, 86 und 87 bis in den Bereich dieser Anschlussflansche. - Figur 8 zeigt schematisch die diesbezügliche äußere Kontur 89 des Verbindungsbausteines 8, wonach sich die querverlaufenden Zylinderbereiche bis in die Flanschbereiche 84 fortsetzen.

Figur 9 zeigt eine Schnittdarstellung längs der Linie IX-IX in Figur 6. Dadurch ist die Abstützung der Phasenleiterabschnitte mit Hilfe von Stützisolatoren 88 zu erkennen. Weiterhin ist zu erkennen, dass der Phasenleiterabschnitt 87 derart gekröpft ist und dass auch die Phasenleiterabschnitte 64 und 65 derart gekröpft sind, dass diese Phasenleiterabschnitte in den sich kreuzenden Bereichen einerseits oberhalb, andererseits unterhalb einer Mittelebene M verlaufen, wobei die vertikalen Abstände von der Mittelebene gleich groß gewählt sind. Die Mittelebene M ist dabei die gleiche Ebene, in der die Mittelachsen der Anschlussflansche 81 bis 84 liegen.

## Patentansprüche

1. Dreiphasige Hochspannungsschaltanlage mit einphasig gekapselten Baugruppen wie Leistungsschaltern (11, 12, 13, 14, 15) und stromleitenden Verbindungsstücken (22),
bei der drei Leistungsschalter (11) parallel nebeneinander angeordnet und über gekapselte Phasenleiterabschnitte mit quer zu den Leistungsschaltern verlaufenden stromleitenden Verbindungsstücken (22) verbunden sind
und bei der sowohl die Leistungsschalter (11) als auch die stromleitenden Verbindungsstücke (22) an den Verbindungsstellen mit je einem eine Mittelachse aufweisenden Anschlussflansch versehen sind und die Mittelachsen der an den Verbindungsstellen der Leistungsschalter vorgesehenen Anschlussflansche in einer gemeinsamen Ebene liegen,
**dadurch gekennzeichnet,**
**dass** zur Aufnahme der Phasenleiterabschnitte (64, 65, 66, 67, 68, 69) ein einstückiger Verbindungsbaustein (2) angeordnet ist,
der mit wenigstens zwei Anschlussbereichen mit jeweils drei nebeneinander angeordneten, jeweils eine Mittelachse aufweisenden Anschlussflanschen (61, 62, 63) versehen ist,
wobei sowohl die Mittelachsen (A, B, C, A', B', C')der Anschlussflansche des Verbindungsbausteines (2) als auch die Mittelachsen der Anschlussflansche der stromleitenden Verbindungsstücke (22) in der gleichen Ebene (M) wie die Mittelachsen der Anschlussflansche der Leistungsschalter (11) liegen.

2. Hochspannungsanlage nach Anspruch 1,
**dadurch gekennzeichnet,**
**dass** der Verbindungsbaustein (9) als flaches Gehäuse (91) ausgebildet ist, das den Charakter eines 90°-Sektors einer kreisförmigen Scheibe aufweist,
wobei in dem Gehäuse drei Phasenleiterabschnitte (71, 72, 73) angeordnet sind, die viertelkreisringförmig gestaltet sind und konzentrisch zueinander verlaufen (Figuren 3 und 4).

3. Hochspannungsanlage nach Anspruch 2,
**dadurch gekennzeichnet,**
**dass** jeder Phasenleiterabschnitt (71, 72, 73) für sich gekapselt ist und über wenigstens einen Stützisolator (74) am Gehäuse (91) abgestützt ist.

4. Hochspannungsanlage nach Anspruch 1,
**dadurch gekennzeichnet,**
**dass** zur Verbindung von mehr als zwei Baugruppen (11, 12, 22) der Verbindungsbaustein als flaches, quaderförmiges Gehäuse (6) ausgebildet ist
und **dass** in dem Gehäuse sich kreuzende Phasenleiterabschnitte (64, 65, 66, 67, 68, 69) angeordnet sind,
wobei die Phasenleiterabschnitte in einem gemeinsamen Kapselungsraum angeordnet und am Gehäuse isolierend (88) abgestützt sind.

5. Hochspannungsanlage nach Anspruch 4,
**dadurch gekennzeichnet,**
**dass** das flache, quaderförmige Gehäuse (6) an drei Seitenflächen mit Anschlussflanschen (61, 62, 63) versehen ist und dass im Kapselungsraum drei von einer Seitenfläche zur gegenüberliegenden Seitenfläche verlaufende Phasenleiterabschnitte (64, 65, 66) sowie drei von diesen Phasenleiterabschnitten zur dritten Seitenfläche abzweigende Phasenleiterabschnitte (67, 68, 69) angeordnet sind.

6. Hochspannungsanlage nach Anspruch 4,
**dadurch gekennzeichnet,**
**dass** das flache, quaderförmige Gehäuse (80) an allen vier Seitenflächen mit Anschlussflanschen (81, 82, 83, 84) versehen ist
und **dass** im Kapselungsraum drei von einer Seitenfläche zur gegenüberliegenden Seitenfläche verlaufende Phasenleiterabschnitte (64, 65, 66) sowie drei weitere, die erstgenannten Phasenleiterabschnitte kreuzende Phasenleiterabschnitte (85, 86, 87) angeordnet sind,
wobei jeweils ein erstgenannter und ein weiterer Phasenleiterabschnitt miteinander verbunden sind.

7. Hochspannungsanlage nach einem der Ansprüche 4 bis 6,
**dadurch gekennzeichnet,**
**dass** das Gehäuse (60, 80) ein Gussgehäuse ist, wobei die inneren und die äußeren Konturen dieses Gussgehäuses im wesentlichen von drei parallel verlaufenden Zylindern, die von drei senkrecht dazu, ebenfalls parallel verlaufenden Zylindern gekreuzt werden, bestimmt sind.

8. Hochspannungsanlage nach Anspruch 7,
**dadurch gekennzeichnet,**
**dass** die Boden- und die Deckfläche des flachen Gehäuses (60, 80) im Bereich der Zwickel (53) der sich kreuzenden Zylinder stoffschlüssig miteinander verbunden sind.

9. Hochspannungsanlage nach einem der Ansprüche 4 bis 8,
**dadurch gekennzeichnet,**
**dass** die sich jeweils kreuzenden Phasenleiterabschnitte (64, 65, 87) derart gekröpft sind, dass im jeweiligen Kreuzungsbereich der eine Phasenleiterabschnitt (87) um den gleichen Betrag oberhalb der die Mittelachsen der Anschlussflansche aufnehmenden Ebene (M) verläuft wie der andere Phasenleiterabschnitt (64, 65) unterhalb dieser Mittelebene.

## Claims

1. Three-phase high-voltage switchgear assembly having single-phase-encapsulated assemblies such as circuit breakers (11, 12, 13, 14, 15) and current-carrying connecting pieces (22),
in which three circuit breakers (11) are arranged parallel alongside one another and are connected via encapsulated phase conductor sections to current-carrying connecting pieces (22) which run transversely with respect to the circuit breakers, and in which both the circuit breakers (11) and the current-carrying connecting pieces (22) are provided at each of the connecting points with a connecting flange which has a centre axis, and the centre axes of the connecting flanges which are provided at the connecting points of the circuit breakers lie on a common plane, **characterized in that** an integral connecting module (2) is arranged for holding the phase conductor sections (64, 65, 66, 67, 68, 69),
which integral connecting module (2) is provided with at least two connecting areas each having three connecting flanges (61, 62, 63) which are arranged alongside one another and each have a centre axis,
with both the centre axes, (A, B, C, A', B', C') of the connecting flanges of the connecting module (2) and the centre axes of the connecting flanges of the current-carrying connecting pieces (22) lying on the same plane (M) as the centre axes of the connecting flanges of the circuit breakers (11).

2. High-voltage installation according to Claim 1, **characterized in that** the connecting module (9) is in the form of a flat housing (91) which has the character of a 90° sector of a circular disc,
with three phase conductor sections (71, 72, 73) being arranged in the housing, being in the form of quarter circular rings and running concentrically with respect to one another (figures 3 and 4) .

3. High-voltage installation according to Claim 2, **characterized in that** each phase conductor section (71, 72, 73) is encapsulated in its own right and is supported on the housing (91) via at least one supporting insulator (74).

4. High-voltage installation according to Claim 1, **characterized in that**, in order to connect more than two assemblies (11, 12, 22), the connecting module is in the form of a flat, cuboid housing (6),
and **in that** mutually crossing phase conductor sections (64, 65, 66, 67, 68, 69) are arranged in the housing,
with the phase conductor sections being arranged in a common encapsulation area and being supported in an insulating manner (88) on the housing.

5. High-voltage installation according to Claim 4, **characterized in that** the flat, cuboid housing (6) is provided with connecting flanges (61, 62, 63) on three side surfaces, and **in that** three phase conductor sections (64, 65, 66), which run from one side surface to the opposite side surface, as well as three phase conductor sections (67, 68, 69), which branch off from these phase conductor sections to the third side surface, are arranged in the encapsulation area.

6. High-voltage installation according to Claim 4, **characterized in that** the flat cuboid housing (80) is provided with connecting flanges (81, 82, 83, 84) on all four side surfaces,
and **in that** three phase conductor sections (64, 65, 66), which run from one side surface to the opposite side surface, as well as three further phase conductor sections (85, 86, 87), which cross the first-mentioned phase conductor sections, are arranged in the encapsulation area
with a first-mentioned and a further phase conductor section in each case being connected to one another.

7. High-voltage installation according to one of Claims 4 to 6, **characterized in that** the housing (60, 80) is a cast housing, with the inner and the outer contours of this cast housing being defined essentially by three parallel-running cylinders, which are crossed by three cylinders which run at right angles thereto, likewise parallel.

8. High-voltage installation according to Claim 7, **characterized in that** the bottom surface and the top surface of the flat housing (60, 80) are connected to one another integrally in the area of the gap (53) between the crossing cylinders.

9. High-voltage installation according to one of Claims 4 to 8, **characterized in that** the respective mutually crossing phase conductor sections (64, 65, 87) are bent such that, in the respective crossing area, the one phase conductor section (87) runs by the same amount above the plane (M) which accommodates the centre axes of the connecting flanges as the other phase conductor section (64, 65) runs below this centre plane.

## Revendications

1. Installation de commutation de haute tension triphasée, comprenant des modules blindés de manière monophasée, comme des disjoncteurs ( 11, 12, 13, 14, 15 ) et des pièces ( 22 ) de liaison conduisant le courant,
dans laquelle trois disjoncteurs ( 11 ) sont montés en parallèle les uns à côté des autres et sont reliés par des sections de conducteur de phase blindés à des pièces ( 22 ) de liaison conduisant le courant et s'étendant transversalement aux disjoncteurs,
et dans laquelle à la fois les disjoncteurs ( 11 ) et les pièces ( 22 ) de liaison conduisant le courant sont munis aux points de liaison de respectivement une bride de raccordement ayant un axe médian et les axes médians des brides de raccordement prévus aux points de liaison des disjoncteurs sont dans un plan commun,
**caractérisée**
**en ce qu'**un module ( 2 ) de liaison d'une seule pièce est disposé pour recevoir les sections ( 64, 65, 66, 67, 68, 69 ) de conducteur de phase,
le module est muni d'au moins deux zones de raccordement, ayant respectivement trois brides ( 61, 62, 63 ) de raccordement disposées les unes à côté des autres et ayant respectivement un axe médian,
à la fois les axes ( A, B, C, A', B', C' ) médians des brides de raccordement du module ( 2 ) de liaison et les axes médians des brides de raccordement des pièces ( 22 ) de liaison conduisant le courant étant dans le même plan ( M ) que les axes médians des brides de raccordement des disjoncteurs ( 11 ) .

2. Installation de haute tension suivant la revendication 1, **caractérisée**
**en ce que** le module ( 9 ) de liaison est constitué en boîtier ( 91 ) plat, qui a le caractère d'un secteur à 90° d'un disque circulaire,
dans laquelle dans le boîtier sont disposées trois sections ( 71, 72, 73 ) de conducteur de phase, qui sont conformées en quart d'anneau circulaire et qui s'étendent concentriquement les unes aux autres ( Figures 3 et 4 ).

3. Installation de haute tension suivant la revendication 2, **caractérisée**
**en ce que** chaque section ( 71, 72, 73 ) de conducteur de phase est blindée en soi et s'appuie sur le boîtier ( 91 ) par au moins un isolant ( 71 ) d'appui.

4. Installation de haute tension suivant la revendication 1, **caractérisée**
**en ce que**, pour la liaison de plus de deux modules ( 11, 12, 13 ), le module de liaison est constitué sous la forme d'un boîtier ( 6 ) plat parallélépipédique,
et **en ce que** des sections ( 64, 65, 66, 67, 68, 69 ) de conducteur de phase se croisant sont disposées dans le boîtier,
les sections de conducteur de phase étant disposées dans un espace commun de blindage et s'appuyant sur le boîtier en étant isolées ( 88 ).

5. Installation de haute tension suivant la revendication 4, **caractérisée**
**en ce que** le boîtier ( 6 ) plat et parallélépipédique est pourvu sur trois faces latérales de brides ( 61, 62, 63 ) de raccordement et en ce que, dans l'espace de blindage, sont disposées trois sections ( 64, 65, 66 ) de conducteur de phase s'étendant d'une face latérale à la face latérale opposée ainsi que trois sections ( 67, 68, 69 ) de conducteur de phase bifurquant de ces sections de conducteur de phase vers la troisième face latérale.

6. Installation de haute tension suivant la revendication 4, **caractérisée**
**en ce que** le boîtier ( 80 ) plat et parallélépipédique est pourvu sur toutes ses quatre faces latérales de brides ( 81, 82, 83, 84 ) de raccordement,
et **en ce que**, dans l'espace de blindage, sont disposées trois sections ( 64, 65, 66 ) de conducteur de phase s'étendant d'une face latérale à la face latérale opposée, ainsi que trois autres sections ( 85, 86, 87 ) de conducteur de phase croisant les sections de conducteur de phase mentionnées en premier,
respectivement une section de conducteur de phase mentionnée en premier et une autre section de conducteur de phase étant reliées entre elles.

7. Installation de haute tension suivant l'une des revendications 4 à 6,
**caractérisée**
**en ce que** le boîtier ( 60, 80 ) est un boîtier coulé, les contours intérieurs et les contours extérieurs de ce boîtier coulé étant déterminés sensiblement par trois cylindres s'étendant parallèlement, qui sont croisés par trois cylindres qui leur sont perpendiculaires et qui s'étendent également de façon parallèle.

8. Installation de haute tension suivant la revendication 7, **caractérisée**
**en ce que** la face de fond et la face de sommet du boîtier ( 60, 80 ) plat sont reliées entre elles à complémentarité de matière dans la région du coin ( 53 ) des cylindres qui se croisent.

9. Installation de haute tension suivant l'une des revendications 4 à 8,
**caractérisée**
**en ce que** les sections ( 64, 65, 87 ) de conducteur de phase qui se croisent respectivement sont coudées, de manière à ce que, dans la zone de croisement respectif, l'une des sections ( 87 ) de conducteur de phase s'étende du même montant au-dessus du plan ( M ) dans lequel passent les axes médians des brides de raccordement que l'autre section ( 64, 65 ) de conducteur de phase en dessous de ce plan médian.
